# EUROPEAN PATENT SPECIFICATION

(11) **EP 2 824 730 B1**
(45) Date of publication and mention of the grant of the patent: **17.05.2017**
(21) Application number: 13194977.8
(22) Date of filing: 29.11.2013
(51) Int. Cl.: H01M 2/10, H01M 2/30, H01M 10/42, H01M 2/20, H01M 2/34

(54) **Battery Pack**
Batteriepack
Bloc-batteries

(30) Priority: 09.07.2013 US 201361844370 P
(43) Date of publication of application: 14.01.2015
(73) Proprietor: Samsung SDI Co., Ltd., Gyeonggi-do 449-577 (KR)
(72) Inventor: Ahn, Byung-Kook, Yongin-si, Gyeonggi-do (KR); Moon, Dae-Yon, Yongin-si, Gyeonggi-do (KR)
(74) Representative: Gulde & Partner

(56) References cited:
- EP-A1- 2 706 588
- EP-A2- 2 579 359
- DE-A1-102011 079 289
- US-A1- 2010 052 692
- US-A1- 2010 136 408
- US-A1- 2012 214 024

## Description

### BACKGROUND OF THE INVENTION

### Field of the Invention

The present invention relates to a battery pack.

### Description of Related Art

With the development of wireless Internet or communication technology, portable computers which may be operated by using a battery without a power supply device have rapidly spread. In general, portable computers are widely used for work or personal purposes because of their compact designs, easy portability, and high mobility. A portable computer may include an internal battery pack in order to be used in various places without being affected by a power supply device. Also, the internal battery pack may include unit batteries that may be repeatedly re-charged/discharged.

U.S. Patent Publication No. 2010/052692 discloses a car battery system provided with battery blocks that retain a plurality of battery cells in a stacked configuration and have terminal planes, which are coincident with terminal surfaces established by positive and negative battery cell electrode terminals, and with battery state detection circuits that connect with the electrode terminals of each battery cell to detect the condition of each battery cell. The car battery system implements a battery state detection circuit on a circuit board and the circuit board is mounted on a battery block in a position opposite the terminal plane of the battery block. Further, the positive and negative electrode terminals of each battery cell are connected with a circuit board for connection to a battery state detection circuit.

### SUMMARY OF THE INVENTION

The present invention is defined by the features of claim 1 and relates to a structure of a battery pack.

According to a first aspect the present invention provides a battery pack comprising: a plurality of prismatic unit batteries that each comprise a can having an opening, an electrode assembly received in the can and a cap plate sealing the opening of the can, and are arranged side by side in a first direction such that the cap plates are exposed in the same direction; and a protection circuit module that is disposed adjacent to the cap plates of the plurality of unit batteries, and comprises a circuit board extending in the first direction; wherein each of the plurality of unit batteries comprises: a first terminal that is disposed on a first area of the cap plate and connects the unit battery and the protection circuit module; and a second terminal that is disposed on a second area of the cap plate and connects the unit battery and the protection circuit module; characterized in that, the protection circuit module is arranged such that a wide surface of the protection circuit module is located perpendicular to a wide surface of the cap plate; and the circuit board comprises at least one terminal hole, wherein an end portion of at least one of the first terminal and the second terminal of the unit battery is inserted into the terminal hole.

The circuit board of the battery pack of the invention may comprise a plurality of terminal holes, wherein an end portion of the first terminal and the second terminal of each of the plurality of unit batteries is inserted into one of the terminal holes, respectively.

On the circuit board of the protection circuit module of the battery pack of the invention wires can be formed such as to electrically connect the plurality of unit batteries in parallel and/or in series.

The end portions of the terminals of the plurality of unit batteries may be formed such that hook-like structures are achieved. The battery pack of the invention may comprise terminals, wherein at least one of the first terminal and the second terminal comprises: a first surface that is parallel to the cap plate; a second surface that is bent in a direction substantially perpendicular to the first surface; and a third surface that is bent in a direction substantially perpendicular to the second surface and is parallel to the first surface. Preferably, the second surface is disposed adjacent to a first long side of the cap plate, and the circuit board is disposed on a plane adjacent to the second surface. The third surface is preferably inserted into the terminal hole to be electrically connected to the circuit board.

It is to be understood that for the purpose of the present invention the term "surface" can be used interchangingly with the terms "member" and/or "body" in order to define the structure of the terminals, in particular in order to define first, second and third surfaces of the first and/or second terminal of the unit batteries.

The protection circuit module of the battery pack of the invention may further comprise a protection device and a height of the protection device may be equal to or less than a distance between a first long side of the cap plate and a second long side of the cap plate that is opposite to the first long side.

In the battery pack of the invention, facing surfaces of adjacent unit batteries from among the plurality of unit batteries can be insulated from each other.

Preferably, each of the unit batteries of the battery pack of the invention comprises an electrode pin that is formed on the cap plate and has a first polarity, wherein the cap plate has a second polarity that is different from the first polarity. The first terminal may be formed to electrically connect the electrode pin and the protection circuit module, wherein the second terminal may electrically connect the cap plate and the protection circuit module.

The battery pack of the invention may further comprise a holder that is disposed between the first terminal and the cap plate, and insulates the cap plate and the first terminal while exposing the electrode pin.

In the battery pack of the invention, the first terminal may further comprise a temperature cutoff.

In the battery pack of the invention, the unit battery may further comprise a connection piece that is formed on the cap plate to be directly connected to the second terminal, and is formed of the same material as a material of the second terminal.

According to another aspect of the present invention, there is provided a battery pack including: a plurality of unit batteries that each include a can having an opening, an electrode assembly received in the can and including a first electrode plate, a second electrode plate, and a separator disposed between the first electrode plate and the second electrode plate, and a cap plate sealing the opening of the can, and are arranged side by side in a first direction such that the cap plates are exposed in the same direction; and a protection circuit module that is disposed adjacent to the cap plates of the plurality of unit batteries, and includes a circuit board extending in the first direction and a protection device mounted on the circuit board, wherein each of the plurality of unit batteries includes: a first terminal that is disposed on a first area of the cap plate and connects the unit battery and the protection circuit module; and a second terminal that is disposed on a second area of the cap plate and connects the unit battery and the protection circuit module.

The circuit board may include at least one terminal hole, wherein an end portion of at least one of the first terminal and the second terminal is inserted into the terminal hole.

At least one of the first terminal and the second terminal may include: a first surface that is parallel to the cap plate; a second surface that is bent in a direction substantially perpendicular to the first surface; and a third surface that is bent in a direction substantially perpendicular to the second surface and is parallel to the first surface.

The second surface may be disposed adjacent to a first long side of the cap plate, and the circuit board is disposed on a plane adjacent to the second surface.

A height of the protection device may be equal to or less than a distance between the first long side of the cap plate and a second long side of the cap plate that is opposite to the first long side.

The circuit board may include at least one terminal hole, wherein the third surface is inserted into the terminal hole to be electrically connected to the circuit board.

Each of the unit batteries may include an electrode pin that is formed on the cap plate and has a first polarity, wherein the cap plate has a second polarity that is different from the first polarity.

The first terminal may electrically connect the electrode pin and the protection circuit module, and the second terminal may electrically connect the cap plate and the protection circuit module.

The battery pack may further include a holder that is disposed between the first terminal and the cap plate, and insulates the cap plate and the first terminal while exposing the electrode pin.

The first terminal may further include a temperature cutoff (TCO).

Facing surfaces of adjacent unit batteries from among the plurality of unit batteries may be insulated from each other.

According to a further aspect of the present invention, there is provided a battery pack including: a plurality of unit batteries that each include a can including an opening and formed of a metal material, an electrode assembly received in the can and including a first electrode plate, a second electrode plate, and a separator disposed between the first electrode plate and the second electrode plate, and a cap plate sealing the opening of the cap; and a protection circuit module that is disposed adjacent to the cap plates of the plurality of unit batteries and includes a circuit board and a protection device, wherein each of the plurality of unit batteries includes: a first terminal that electrically connects the protection circuit module and an electrode pin that is formed on the cap plate and has a first polarity; and a second terminal that electrically connects the protective circuit module and the cap plate having a polarity that is opposite to the first polarity.

The circuit board may include at least one terminal hole.

An end portion of the first terminal and an end portion of the second terminal may be inserted into the terminal hole.

The battery pack may further include a holder that is disposed between the first terminal and the cap plate, and insulates the cap plate and the first terminal while exposing the electrode pin.

The first terminal may include: a first surface that is connected to the electrode pin; a second surface that is bent from the first surface; and a third surface that is bent from the second surface and is parallel to the first surface.

The first surface may be divided into a first portion and a second portion, wherein the first portion and the second portion are electrically connected to each other through a temperature cutoff (TCO) that is disposed between the first portion and the second portion.

The second terminal may include: a first surface that is connected to a portion of the cap plate; a second surface that is bent from the first surface; and a third surface that is bent from the second surface and is parallel to the first surface.

The battery pack may further include a connection piece that is formed on the cap plate to be directly connected to the second terminal, and is formed of the same material as a material of the second terminal.

Facing surfaces of adjacent unit batteries from among the plurality of unit batteries may be insulated from each other.

### BRIEF DESCRIPTION OF THE DRAWINGS

FIG. 1 is a perspective view schematically illustrating a battery pack according to an embodiment of the present invention.
FIG. 2 is an exploded perspective view of FIG. 1.
FIG. 3 is an enlarged perspective view illustrating a portion III of FIG. 1.
FIG. 4 is an exploded perspective view illustrating a unit battery according to an embodiment of the present invention.

### DETAILED DESCRIPTION OF THE INVENTION

Like numerals denote like elements throughout. It will also be understood that when a layer, film, region, or plate is referred to as being "on" another layer, film, region, or plate, it can be directly on the other layer, film, region, or plate, or intervening layers, films, regions, or plates may also be present therebetween.

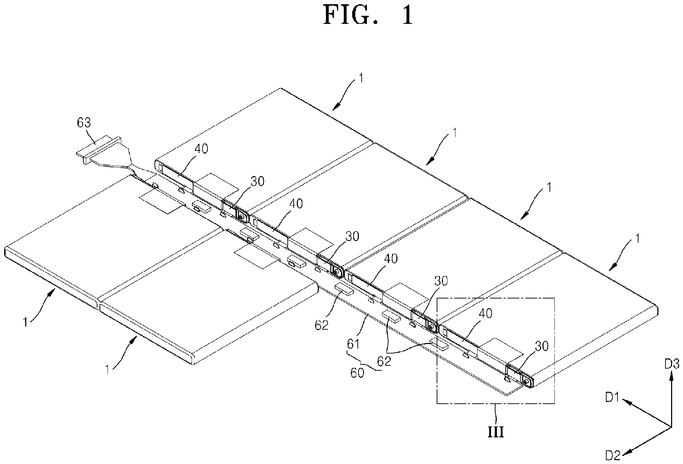

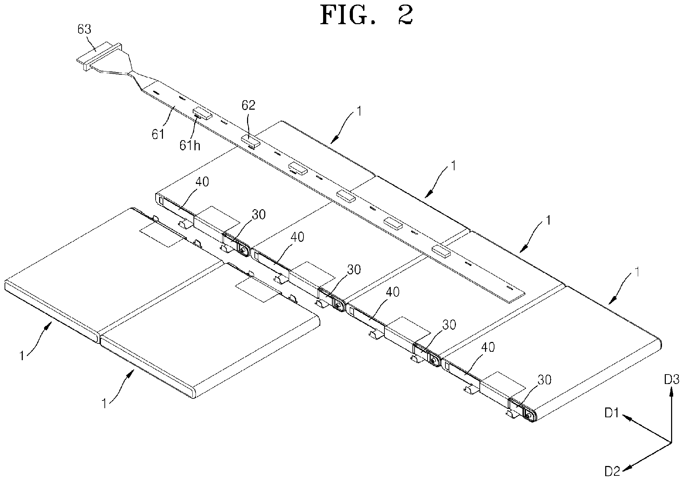

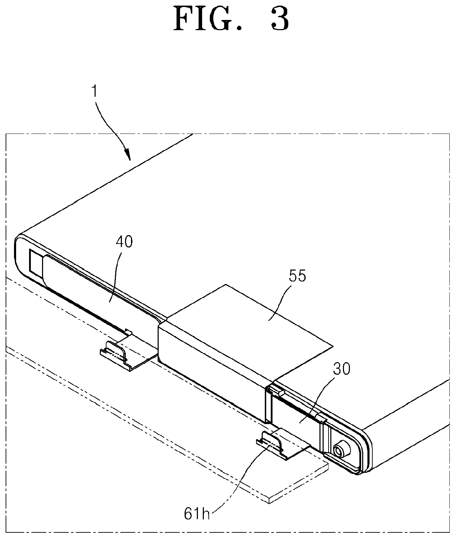

FIG. 1 is a perspective view schematically illustrating a battery pack according to an embodiment of the present invention. FIG. 2 is an exploded perspective view of FIG. 1. FIG. 3 is an enlarged perspective view illustrating a portion III of FIG. 1.

Referring to FIGS. 1 and 2, the battery pack includes a plurality of unit batteries 1 and a protection circuit module 60. Each of the unit batteries 1 includes first and second terminals 30 and 40, and is directly electrically connected to the protection circuit module 60.

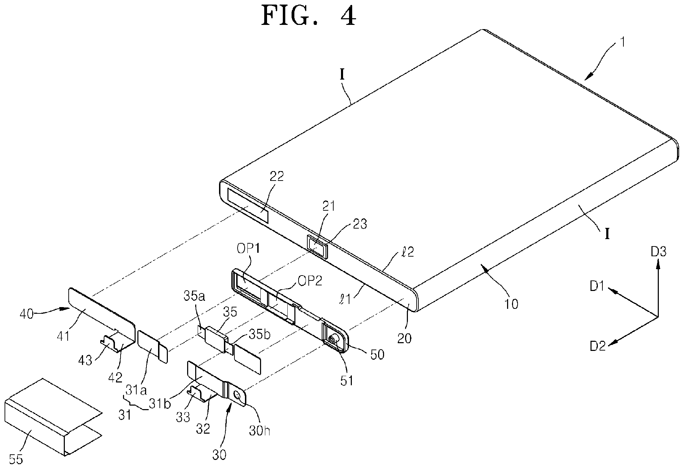

Each of the unit batteries 1 which is a rechargeable secondary battery may be a lithium-ion battery. Each of the unit batteries 1 is manufactured to have a prismatic shape, for example, a substantially hexahedral shape. Each of the unit batteries 1 includes a can 10 (see FIG. 4) and a cap plate 20 (see FIG. 4) sealing a side surface of the can 10. The unit batteries 1 may be arranged side by side in a first direction D1 such that the cap plates 20 are exposed in the same direction. For example, as shown in FIG. 1, four unit batteries 1 may be arranged side by side in the first direction D1 such that the cap plates 20 are exposed in a second direction D2, and two unit batteries 1 may be arranged side by side in the first direction D1 such that the cap plates 20 are exposed in a direction -D2 that is opposite to the second direction D2.

Although four unit batteries 1 are aligned and two unit batteries 1 are aligned to face each other in FIG. 1, the number and arrangement of the unit batteries 1 are not limited thereto. Alternatively, two or more unit batteries 1 may be arranged side by side in the first direction D1.

The first terminal 30 and the second terminal 40 are disposed on a side surface of each of the unit batteries 1, that is, on the cap plate 20. Any one of the first and second terminals 30 and 40 is a negative electrode of each of the unit batteries 1 and the other one is a positive electrode of each of the unit batteries 1. In FIG. 1, the following explanation will be made on the assumption that the first terminal 30 is a negative electrode and the second terminal 40 is a positive electrode.

The first terminal 30 is disposed on the cap plate 20, and a portion of the first terminal 30 disposed away from the cap plate 20 extends toward the protection circuit module 60. The portion of the first terminal 30 is bent.

The second terminal 40 is disposed on the cap plate 20, and a portion of the second terminal 40 disposed away from the cpa plate 20 extends toward the protection circuit module 60. The portion of the second terminal 40 is bent.

The bent end portions of the first and second terminals 30 and 40 are inserted into terminal holes 61 h formed in the protection circuit module 60, and each of the unit batteries 1 is electrically connected to the protection circuit module 60 when the bent end portions of the first and second terminals 30 and 40 are inserted into the terminal holes 61 h.

The protection circuit module 60 may be disposed adjacent to the cap plates 20 of the unit batteries 1. The protection circuit module 60 may be electrically connected to the unit batteries 1 to control the unit batteries 1 to be charged/discharged, and may prevent overheating and explosion caused by overcharging, overdischarge, or overcurrent. The protection circuit module 60 includes a circuit board 61, and a plurality of protection devices 62 mounted on the circuit board 61.

The circuit board 61 includes at least one terminal hole 61 h. The terminal hole 61 h may be formed in an edge of the circuit board 61, and each of the unit batteries 1 may be directly connected to the protection circuit module 60 when the first and second terminals 30 and 40 are inserted into the terminal holes 61 h.

As shown in FIG. 3, the end portions of the first and second terminals 30 and 40 may be inserted into the terminal holes 61 h formed in the circuit board 61, and the terminal holes 61 h may have slit shapes extending in the first direction D1. The end portion of the first terminal 30 and the end portion of the second terminal 40 are inserted into the terminal holes 61 h and are soldered.

Since each of the unit batteries 1 is directly connected to the protection circuit module 60 through the first and second terminals 30 and 40 provided on the cap plate 20, the unit batteries 1 may be controlled by the protection circuit module 60 to be charged/discharged, and may be connected in parallel and/or series through wires formed on the protection circuit module 60. Since each of the unit batteries 1 is directly connected to the protection circuit module 60, an intermediate member for connecting the plurality of unit batteries 1 in parallel and/or series is not necessary. Accordingly, an additional space for the intermediate member is not necessary, and it is possible to reduce the total number of parts for manufacturing the battery pack.

The circuit board 61 is disposed adjacent to the cap plate 20, and extends in the first direction D1. In this case, the circuit board 61 may be disposed on a plane adjacent to second surfaces 32 and 42 (see FIG. 4) of the first and second terminals 30 and 40, for example, on substantially the same plane as bottom surfaces of the unit batteries 1. As the circuit board 61 is disposed in this manner, a predetermined space may be formed between a top surface of the circuit board 61 and the cap plate 20, and the plurality of protection devices 62 may be disposed in the predetermined space. A height of each of the protection devices 62 may be equal to or less than a thickness of each of the unit batteries 1, that is, a distance between a first long side l1 (see FIG. 4) and a second long side 12, which is opposite to the first long side L1, of the cap plate 20 (see FIG. 4). In this structure, the protection deviceS 62 may be effectively mounted without increasing a thickness and a width of the battery pack.

The protection device 62 may be formed by selectively forming a safety element including a passive element such as a resistor or a condenser and an active element such as a field-effect transistor (FET), or integrated circuits. A connector 63 for supplying power to an external electronic device may be provided on a side of the protection circuit module 60.

A structure of each of the unit batteries 1 including the first and second terminals 30 and 40 will be explained in detail with reference to FIG. 4.

FIG. 4 is an exploded perspective view illustrating one unit battery 1 according to an embodiment of the present invention.

Referring to FIG. 4, the unit battery 1 includes the can 10, an electrode assembly received in the can 10 through an opening formed in the can 10, the cap plate 20 sealing the opening of the can 10, and the first and second terminals 30 and 40.

The can 10 having a substantially hexahedral shape with one side open may be formed of a metal material in order to increase strength. For example, the can 10 may be formed of aluminum or an aluminum alloy. After the electrode assembly is inserted into the can 10, the opening may be sealed by the cap plate 20. The cap plate 20 may be formed of a metal material such as aluminum or an aluminum alloy, like the can 10. Contact portions between the cap plate 20 and the can 10 may be coupled by laser welding to maintain sealing engagement.

Each of the can 10 and the cap plate 20 is formed of a metal material, and an outer circumferential surface of the can 10 is not surrounded by an insulating film such as a label. Accordingly, when the unit batteries 1 are arranged side by side as shown in FIG. 1, since short-circuit may occur between adjacent unit batteries 1, facing surfaces of the adjacent unit batteries 1 may be insulated from each other to prevent the short-circuit. For example, both side surfaces of the can 10 which are exposed in the first direction D1 may be insulated by using an insulating tape I. Alternatively, the both side surfaces of the can 10 may be insulated by disposing an insulating barrier between adjacent unit batteries 1.

The electrode assembly (not shown) may include a first electrode plate and a second electrode plate each coated with an electrode active material, and a separator disposed between the first and second electrode plates. The electrode assembly may be manufactured by sequentially stacking the first electrode plate, the separator, and the second electrode plate and winding the first electrode plate, the separator, and the second electrode plate in a jelly roll shape.

Although the electrode assembly has a jelly roll shape in FIG. 4, the present embodiment is not limited thereto. Alternatively, the electrode assembly may have a stacked structure in which the first electrode plate, the separator, and the second electrode plate are sequentially stacked.

An electrode pin 21 is formed on the cap plate 20. The first electrode plate is electrically connected to the electrode pin 21, and the second electrode plate is electrically connected to the cap plate 20. Since the first electrode plate and the second electrode plate have different polarities, the electrode pin 21 and the cap plate 20 have different polarities. For example, the electrode pin 21 may have a polarity of a negative electrode, and the cap plate 20 may have a polarity of a positive electrode. In this case, a gasket 23 may be disposed between the electrode pin 21 and the cap plate 20 in order to prevent a short-circuit between the electrode pin 21 and the cap plate 20. The gasket 23 is formed of an insulating material, and prevents a short-circuit between the electrode pin 21 and the cap plate 20.

The first terminal 30 and the second terminal 40 are disposed on the cap plate 20. The first terminal 30 is disposed on a portion (first area) of the cap plate 20, and the second terminal 40 is disposed on another portion (second area) of the cap plate 20. In detail, the first terminal 30 may be disposed on the cap plate 20 to be electrically connected to the electrode pin 21, and the second terminal 40 may be disposed on the cap plate 20 to be electrically connected to the cap plate 20. In this case, a connection piece 22 may be further provided on the cap plate 20 in order to improve weldability between the cap plate 20 and the second terminal 40 formed of different materials. The connection piece 22 is formed of the same material as that of the second terminal 40. For example, each of the connection piece 22 and the first and second terminals 30 and 40 may be formed of nickel.

The first terminal 30 may include a first surface 31 parallel to the cap plate 20, a second surface 32 bent from the first surface 31, and a third surface 33 bent from the second surface 32 and substantially parallel to the first surface 31.

The first terminal I30 may include a temperature cutoff (TCO) 35. To this end, the first surface 31 of the first terminal 30 may be divided into a first portion 31 a and a second portion 31 b. The first portion 31 a and the second portion 31 b may be disposed on the same plane, and the TCO 35 may be electrically connected between the first portion 31 a and the second portion 31 b. For example, one end 35a of the TCO 35 may be connected to an end of the first portion 31 a of the first surface 31, and the other end 35b of the TCO 35 may be connected to an end of the second portion 31 b of the first surface 31.

Since the first terminal 30 is electrically connected to the electrode pin 21, the first terminal 30 has a polarity of a negative electrode. By contrast, since the cap plate 20 has a polarity of a positive electrode, a short-circuit may easily occur between the cap plate 20 and the first terminal 30 that is disposed on the cap plate 20. Accordingly, a holder 50 for electrically insulating the first terminal 30 and the cap plate 20 may be further provided between the first terminal 30 and the cap plate 20.

The holder 50 is directly disposed on the cap plate 20, and includes a first opening OP1 through which the first surface 31 of the first terminal 30 is electrically connected to the electrode pin 21. The holder 50 may further include a second opening OP2 formed in a surface facing the TCO 35 in order for the TCO 35 included in the first terminal 30 to effectively respond to a temperature of the unit battery 1.

The holder 50 may include a protrusion 51 for fixing the first terminal 30. In a state where the first terminal 30 is mounted on the holder 50, the first portion 31 a of the first surface 31 of the first terminal 30 may be welded to the electrode pin 21 and the second portion 31 b of the first surface 31 of the first terminal 30 may be fixed to the protrusion 51. A hole 30h may be formed in the second portion 31 b of the first surface 31. When the protrusion 51 is inserted into the hole 30h and then heat is applied to a portion of an upper end of the protrusion 51, the portion of the upper end of the protrusion 51 may melt and the first terminal 30 may be fixed to the holder 50. A tape 55 fixed to the holder 50 may be further attached in order to prevent the first terminal 30 that is fixed to the holder 50 and welded to the electrode pin 21 from being separated from the unit battery 1.

The second surface 32 of the first terminal 30 may be bent in a direction substantially perpendicular to the first surface 31, and the third surface 33 may be bent in a direction substantially perpendicular to the second surface 32. The second surface 32 is disposed adjacent to the first long side l1 of the cap plate 20. The third surface 33 of the first terminal 30 is inserted as an end portion of the first terminal 30 into the terminal hole 61 h of the protection circuit module 60 as described above with reference to FIGS. 1 through 3.

The second terminal 40 may include a first surface 41 parallel to the cap plate 20, a second surface 42 bent from the first surface 41, and a third surface 43 bent from the second surface 42 and substantially parallel to the first surface 41. The second surface 42 of the second terminal 40 may be bent in a direction substantially perpendicular to the first surface 41, and the third surface 43 may be bent in a direction substantially perpendicular to the second surface 42. The third surface 43 of the second terminal 40 is inserted as an end portion of the second terminal 40 into the terminal hole 61 h of the protection circuit module 60 as described above with reference to FIGS. 1 through 3.

It is to be understood that for the purpose of the present invention the term "surface" can be used interchangingly with the terms "member" and/or "body" in order to define the structure of the terminals, in particular in order to define first, second and third surfaces of the first and/or second terminal of the unit batteries.

According to the one or more embodiments of the present invention, since each of unit batteries is directly connected to a protection circuit module through first and second terminals, the unit batteries may be controlled by the protection circuit module to be charged/discharged and may be connected in parallel and/or series through wires formed on the protection circuit module. Accordingly, an intermediate member for connecting the plurality of unit batteries in parallel and/or series is not necessary, an additional space for the intermediate member is not necessary, and it is possible to reduce the total number of parts for manufacturing a battery pack.

While the present invention has been particularly shown and described with reference to exemplary embodiments thereof, they are provided for the purposes of illustration and it will be understood by those of ordinary skill in the art that various modifications and equivalent other embodiments may be made from the present invention as defined by the appended claims.

## Claims

1. A battery pack comprising:
a plurality of prismatic unit batteries (1) that each comprise a can (10) having an opening, an electrode assembly received in the can (10) and a cap plate (20) sealing the opening of the can (10), and are arranged side by side in a first direction such that the cap plates (20) are exposed in the same direction; and
a protection circuit module (60) that is disposed adjacent to the cap plates (20) of the plurality of unit batteries (1), and comprises a circuit board (61) extending in the first direction,
wherein each of the plurality of unit batteries (1) comprises:
a first terminal (30) that is disposed on a first area of the cap plate (20) and connects the unit battery (1) and the protection circuit module (60); and
a second terminal (40) that is disposed on a second area of the cap plate (20) and connects the unit battery (1) and the protection circuit module (60);
**characterized in that**,
the protection circuit module (60) is arranged such that a wide surface of the protection circuit module (60) is located perpendicular to a wide surface of the cap plate (20); and
the circuit board (61) comprises at least one terminal hole (61 h),
wherein an end portion of at least one of the first terminal (30) and the second terminal (40) of the unit battery (1) is inserted into the terminal hole (61 h).

2. The battery pack of claim 1, wherein the circuit board (61) comprises a plurality of terminal holes (61 h),
wherein an end portion of the first terminal (30) and the second terminal (40) of each of the plurality of unit batteries (1) is inserted into one of the terminal holes (61 h) respectively.

3. The battery pack of claim 1 or 2, wherein wires are formed on the circuit board (61) of the protection circuit module (60) such as to electrically connect the plurality of unit batteries (1) in parallel and/or in series.

4. The battery pack of one of the preceding claims, wherein at least one of the first terminal (30) and the second terminal (40) comprises:
a first member (31, 41) that is parallel to the cap plate (20);
a second member (32, 42) that is bent in a direction substantially perpendicular to the first surface (31, 41); and
a third member (33, 43) that is bent in a direction substantially perpendicular to the second surface (32, 42) and is parallel to the first surface (31, 41).

5. The battery pack of claim 4, wherein the second member (32, 42) is disposed adjacent to a first long side (l1) of the cap plate (20), and the circuit board (61) is disposed on a plane adjacent to the second member (32, 42).

6. The battery pack of one of the preceding claims, wherein the protection circuit module (60) further comprises a protection device (62) and wherein a height of the protection device (62) is equal to or less than a distance between a first long side (l1) of the cap plate (20) and a second long side (l2) of the cap plate (20) that is opposite to the first long side (l1).

7. The battery pack of one of claims 4 to 6, wherein the third member (33, 43) is inserted into the terminal hole (61 h) to be electrically connected to the circuit board (61).

8. The battery pack of one of the preceding claims, wherein facing surfaces of adjacent unit batteries (1) from among the plurality of unit batteries (1) are insulated from each other.

9. The battery pack of one of the preceding claims, wherein each of the unit batteries (1) comprises an electrode pin (21) that is formed on the cap plate (20) and has a first polarity,
wherein the cap plate (20) has a second polarity that is different from the first polarity.

10. The battery pack of claim 9, wherein the first terminal (30) electrically connects the electrode pin (21) and the protection circuit module (60), and the second terminal (40) electrically connects the cap plate (20) and the protection circuit module (60).

11. The battery pack of claim 9 or 10, further comprising a holder (50) that is disposed between the first terminal (30) and the cap plate (20), and insulates the cap plate (20) and the first terminal (30) while exposing the electrode pin (21).

12. The battery pack of one of claims 9 to 11, wherein the first terminal (30) further comprises a temperature cutoff (35).

13. The battery pack of one of claims 9 to 12, further comprising a connection piece (22) that is formed on the cap plate (20) to be directly connected to the second terminal (40), and is formed of the same material as a material of the second terminal (40).

## Patentansprüche

1. Batteriepack, umfassend:
eine Vielzahl von prismenförmigen Einheitsbatterien (1), die jeweils eine Umhüllung (10) mit einer Öffnung, eine in der Umhüllung (10) aufgenommene Elektrodenanordnung und eine die Öffnung der Umhüllung (10) verschließende Abdeckplatte (20) umfassen und in einer ersten Richtung nebeneinander derart angeordnet sind, dass die Abdeckplatten (20) in derselben Richtung freiliegen; und
ein Schutzschaltungsmodul (60), das angrenzend an die Abdeckplatten (20) von der Vielzahl von Einheitsbatterien (1) angeordnet ist und eine Leiterplatte (61) umfasst, die in der ersten Richtung verläuft,
wobei jede von der Vielzahl von Einheitsbatterien (1) Folgendes umfasst:
einen ersten Anschluss (30), der an einem ersten Bereich der Abdeckplatte (20) angeordnet ist und die Einheitsbatterie (1) und das Schutzschaltungsmodul (60) verbindet; und
einen zweiten Anschluss (40), der an einem zweiten Bereich der Abdeckplatte (20) angeordnet ist und die Einheitsbatterie (1) und das Schutzschaltungsmodul (60) verbindet;
**dadurch gekennzeichnet, dass**
das Schutzschaltungsmodul (60) so angeordnet ist, dass eine breite Fläche des Schutzschaltungsmoduls (60) senkrecht zu einer breiten Fläche der Abdeckplatte (20) angeordnet ist; und
die Leiterplatte (61) mindestens ein Anschlussloch (61 h) umfasst,
wobei ein Endabschnitt von dem ersten Anschluss (30) und dem zweiten Anschluss (40) der Einheitsbatterie (1) in dem Anschlussloch (61 h) steckt.

2. Batteriepack nach Anspruch 1, wobei die Leiterplatte (61) eine Vielzahl von Anschlusslöchern (61 h) umfasst,
wobei ein Endabschnitt des ersten Anschlusses (30) und des zweiten Anschlusses (40) von jeder von der Vielzahl von Einheitsbatterien (1) jeweils in einem der Anschlusslöcher (61 h) steckt.

3. Batteriepack nach Anspruch 1 oder 2, wobei auf der Leiterplatte (61) des Schutzschaltungsmoduls (60) Drähte ausgebildet sind, damit die Vielzahl von Einheitsbatterien (1) elektrisch parallel und/oder in Reihe geschaltet ist.

4. Batteriepack nach einem der vorhergehenden Ansprüche, wobei zumindest der erste Anschluss (30) und der zweite Anschluss (40) Folgendes umfasst bzw. umfassen:
ein erstes Element (31, 41), das parallel zur Abdeckplatte (20) verläuft;
ein zweites Element (32, 42), das in einer Richtung gebogen ist, die im Wesentlichen senkrecht zur ersten Fläche (31, 41) verläuft; und
ein drittes Element (33, 43), das in einer Richtung gebogen ist, die im Wesentlichen senkrecht zur zweiten Fläche (32, 42) und parallel zur ersten Fläche (31, 41) verläuft.

5. Batteriepack nach Anspruch 4, wobei das zweite Element (32, 42) angrenzend an eine erste lange Seite (l1) der Abdeckplatte (20) angeordnet ist, und die Leiterplatte (61) in einer Ebene angrenzend an das zweite Element (32, 42) angeordnet ist.

6. Batteriepack nach einem der vorhergehenden Ansprüche, wobei das Schutzschaltungsmodul (60) ferner eine Schutzvorrichtung (62) umfasst und wobei eine Höhe der Schutzvorrichtung (62) maximal einem Abstand zwischen einer ersten langen Seite (l1) der Abdeckplatte (20) und einer zweiten langen Seite (l2) der Abdeckplatte (20) entspricht, die der ersten langen Seite (l1) gegenüberliegt.

7. Batteriepack nach einem der Ansprüche 4 bis 6, wobei das dritte Element (33, 43) in dem Anschlussloch (61h) steckt und so elektrisch mit der Leiterplatte (61) verbunden ist.

8. Batteriepack nach einem der vorhergehenden Ansprüche, wobei einander zugewandte Flächen benachbarter Einheitsbatterien (1) von der Vielzahl von Einheitsbatterien (1) voneinander isoliert sind.

9. Batteriepack nach einem der vorhergehenden Ansprüche, wobei jede der Einheitsbatterien (1) einen Elektrodenstift (21) umfasst, der auf der Abdeckplatte (20) ausgebildet ist und eine erste Polarität aufweist,
wobei die Abdeckplatte (20) eine zweite Polarität aufweist, die sich von der ersten Polarität unterscheidet.

10. Batteriepack nach Anspruch 9, wobei der erste Anschluss (30) den Elektrodenstift (21) und das Schutzschaltungsmodul (60) elektrisch verbindet, und der zweite Anschluss (40) die Abdeckplatte (20) und das Schutzschaltungsmodul (60) elektrisch verbindet.

11. Batteriepack nach Anspruch 9 oder 10, der ferner einen Halter (50) umfasst, der zwischen dem ersten Anschluss (30) und der Abdeckplatte (20) angeordnet ist und die Abdeckplatte (20) und den ersten Anschluss (30) isoliert und dabei gleichzeitig den Elektrodenstift (21) freilegt.

12. Batteriepack nach einem der Ansprüche 9 bis 11, wobei der erste Anschluss (30) ferner eine Temperaturabschaltung (35) umfasst.

13. Batteriepack nach einem der Ansprüche 9 bis 12, der ferner ein Verbindungsteil (22) umfasst, das auf der Abdeckplatte (20) ausgebildet ist, damit es direkt mit dem zweiten Anschluss (40) verbunden wird, und aus demselben Material wie ein Material des zweiten Anschlusses (40) gebildet ist.

## Revendications

1. Bloc-batteries comprenant :
une pluralité de batteries unitaires prismatiques (1) qui comprennent chacune un boîtier (10) ayant une ouverture, un ensemble d'électrodes reçu dans le boîtier (10) et une plaque de capuchon (20) scellant l'ouverture du boîtier (10), et qui sont agencées côte à côte dans une première direction de sorte que les plaques de capuchon (20) soient exposées dans la même direction ; et
un module de circuit de protection (60) qui est disposé de manière adjacente aux plaques de capuchon (20) de la pluralité de batteries unitaires (1), et qui comprend une carte de circuit imprimé (61) s'étendant dans la première direction,
où chacune de la pluralité de batteries unitaires (1) comprend :
une première borne (30) qui est disposée sur une première zone de la plaque de capuchon (20) et qui relie la batterie unitaire (1) et le module de circuit de protection (60) ; et
une deuxième borne (40) qui est disposée sur une deuxième zone de la plaque de capuchon (20) et qui relie la batterie unitaire (1) et le module de circuit de protection (60) ;
**caractérisé en ce que**,
le module de circuit de protection (60) est agencé de sorte qu'une surface large du module de circuit de protection (60) soit située perpendiculairement à une surface large de la plaque de capuchon (20) ; et
la carte de circuit imprimé (61) comprend au moins un trou de borne (61h),
où une partie d'extrémité d'au moins l'une de la première borne (30) et de la deuxième borne (40) de la batterie unitaire (1) est insérée dans le trou de borne (61h) .

2. Bloc-batteries de la revendication 1, dans lequel la carte de circuit imprimé (61) comprend une pluralité de trous de borne (61h),
où une partie d'extrémité de la première borne (30) et de la deuxième borne (40) de chacune de la pluralité de batteries unitaires (1) est insérée dans l'un des trous de borne (61h) respectivement.

3. Bloc-batteries de la revendication 1 ou 2, dans lequel des fils sont formés sur la carte de circuit imprimé (61) du module de circuit de protection (60) de manière à relier électriquement la pluralité de batteries unitaires (1) en parallèle et/ou en série.

4. Bloc-batteries de l'une des revendications précédentes, dans lequel au moins l'une de la première borne (30) et de la deuxième borne (40) comprend :
un premier élément (31, 41) qui est parallèle à la plaque de capuchon (20) ;
un deuxième élément (32, 42) qui est courbé dans une direction essentiellement perpendiculaire à la première surface (31, 41) ; et
un troisième élément (33, 43) qui est courbé dans une direction essentiellement perpendiculaire à la deuxième surface (32, 42) et qui est parallèle à la première surface (31, 41).

5. Bloc-batteries de la revendication 4, dans lequel le deuxième élément (32, 42) est disposé de manière adjacente à un premier côté long (11) de la plaque de capuchon (20), et la carte de circuit imprimé (61) est disposée sur un plan adjacent au deuxième élément (32, 42).

6. Bloc-batteries de l'une des revendications précédentes, dans lequel le module de circuit de protection (60) comprend en outre un dispositif de protection (62) et dans lequel une hauteur du dispositif de protection (62) est inférieure ou égale à une distance entre un premier côté long (11) de la plaque de capuchon (20) et un deuxième côté long (12) de la plaque de capuchon (20) qui est opposé au premier côté long (11).

7. Bloc-batteries de l'une des revendications 4 à 6, dans lequel le troisième élément (33, 43) est inséré dans le trou de borne (61h) pour être électriquement relié à la carte de circuit imprimé (61).

8. Bloc-batteries de l'une des revendications précédentes, dans lequel des surfaces opposées de batteries unitaires adjacentes (1) parmi la pluralité de batteries unitaires (1) sont isolées les unes des autres.

9. Bloc-batteries de l'une des revendications précédentes, dans lequel chacune des batteries unitaires (1) comprend une broche d'électrode (21) qui est formée sur la plaque de capuchon (20) et qui présente une première polarité,
où la plaque de capuchon (20) présente une deuxième polarité qui est différente de la première polarité.

10. Bloc-batteries de la revendication 9, dans lequel la première borne (30) relie électriquement la broche d'électrode (21) et le module de circuit de protection (60), et la deuxième borne (40) relie électriquement la plaque de capuchon (20) et le module de circuit de protection (60).

11. Bloc-batteries de la revendication 9 ou 10, comprenant en outre un support (50) qui est disposé entre la première borne (30) et la plaque de capuchon (20), et qui isole la plaque de capuchon (20) et la première borne (30) tout en exposant la broche d'électrode (21).

12. Bloc-batteries de l'une des revendications 9 à 11, dans lequel la première borne (30) comprend en outre un circuit de coupure de température (35).

13. Bloc-batteries de l'une des revendications 9 à 12, comprenant en outre une pièce de liaison (22) qui est formée sur la plaque de capuchon (20) pour être directement reliée à la deuxième borne (40), et qui est formée du même matériau qu'un matériau de la deuxième borne (40).
